(19)

**Europäisches Patentamt**
**European Patent Office**
**Office européen des brevets**

(11) **EP 4 610 881 A1**

(12) **EUROPEAN PATENT APPLICATION**

(43) Date of publication:
**03.09.2025   Bulletin 2025/36**

(21) Application number: **25155579.3**

(22) Date of filing: **03.02.2025**

(51) International Patent Classification (IPC):
**G06N 3/045** (2023.01)       **G06N 3/0495** (2023.01)
**G06N 3/082** (2023.01)       **G06N 5/022** (2023.01)

(52) Cooperative Patent Classification (CPC):
**G06N 5/022; G06N 3/045; G06N 3/0495;**
**G06N 3/082**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:   **27.02.2024   IN 202441014357**

(71) Applicant: **L & T Technology Services Limited**
**Chennai 600089 (IN)**

(72) Inventors:
  • **GUNASEKARAN, SURESH**
    **632301 Tiruvannamalai (IN)**
  • **RAJAN, SANTHIYA**
    **641045 Coimbatore (IN)**

(74) Representative: **Studio Torta S.p.A.**
**Via Viotti, 9**
**10121 Torino (IT)**

(54)   **METHOD AND SYSTEM OF COMPRESSING DEEP LEARNING MODELS**

(57)     A method (600) and system (100) of compressing a first deep learning (DL) model is disclosed. A processor receives a verified DL model. The verified DL model is converted into a standard DL model based on a framework corresponding to a plurality of provisional compression types. A compression strategy is selected from a plurality of compression strategies using a neural network (NN) based on determining a compression feature vector based on a knowledge graph. A concatenated vector is determined based on a model feature vector, a dataset feature vector and compression feature vector. The NN is trained based on the concatenated vector. A bias of the NN is trained based on a model score corresponding to the standard NN. A compression embedding is determined corresponding to the selected compression strategy.

**FIG. 1**

Processed by Luminess, 75001 PARIS (FR)

**Description**

**Technical Field**

This disclosure relates generally to deep learning models and more particularly to a method and system of compressing deep learning models.

**BACKGROUND**

Many real-life situations require immediate processing capabilities right on the device. Imagine home security camera with smart AI capabilities that would be required to analyze possibility of any intruder in real-time to quickly warn about possible intrusion. The primary hurdle in employing cutting-edge AI for real-time applications lies in the limitations of deployment devices-constrained by limited resources, both in memory and processing power. Most edge devices rely on battery power and are unable to accommodate high-computation tasks due to their propensity to rapidly deplete the battery. The highly effective deep learning models tend to be sizable, posing a challenge due to their substantial storage requirements, rendering deployment on resource-restricted devices arduous. Furthermore, larger models contribute to extended inference times and increase energy consumption, rendering them impractical for widespread use in real-world applications despite their impressive performance.

Smaller models typically require less computational power, resulting in faster inference times. This is crucial for real-time applications where quick decisions are necessary, such as in autonomous vehicles or real-time image processing. With that heavy model do face challenges like network delay, power budget, etc. while deploying them on cloud infrastructure. In scenarios where models need to be transferred over a network, heavy models increase the amount of data that needs to be transmitted. This is a drawback in situations with limited bandwidth or where data transfer costs are a concern.

Therefore, there is a requirement for an efficient and effective methodology for compressing deep learning model.

**SUMMARY OF THE INVENTION**

In an embodiment, a method for compressing a deep learning (DL) model is disclosed. The method may include receiving, by a computing device, a verified DL model. In an embodiment, the verified DL model may be determined based on a data verification of a DL model based on a plurality of test datasets. The method may further include converting, by the computing device, the verified DL model into a standard DL model based on a framework corresponding to a plurality of provisional compression types. The method may further include determining, by the computing device, a compression feature vector based on a knowledge graph corresponding to the plurality of provisional compression types. The method may further include determining, by the computing device, a model feature vector based on a set of model attributes corresponding to the standard DL model. The method may further include determining, by the computing device, a dataset feature vector based on a set of input dataset attributes corresponding to an input dataset. The method may further include determining, by the computing device, a concatenated vector of the compression feature vector, the model feature vector and the dataset feature vector. The method may further include selecting, by the computing device, a compression strategy from a plurality of compression strategies using a neural network (NN). In an embodiment, the NN may be trained based on the concatenated vector. In an embodiment, the trained NN may determine a predicted accuracy rate and a predicted parameter reduction information of each of the plurality of compression strategies. In an embodiment, the selected compression strategy by the trained NN may correspond to one of the plurality of compression strategies having a predicted accuracy rate and a predicted parameter reduction information about equal to a reference accuracy rate and a reference parameter reduction information respectively of one or more corresponding provisional compression types from the plurality of provisional compression types. The method may further include determining, by the computing device, a compression embedding corresponding to the selected compression strategy.

In another embodiment, a system of compressing a deep learning (DL) model is disclosed. The system may include a processor, a memory communicably coupled to the processor, wherein the memory may store processor-executable instructions, which when executed by the processor may cause the processor to receive a verified DL model. In an embodiment, the verified DL model may be determined based on a data verification of a DL model based on a plurality of test datasets. The processor may further convert the verified DL model into a standard DL model based on a framework corresponding to a plurality of provisional compression types. The processor may further determine a compression feature vector based on a knowledge graph corresponding to the plurality of provisional compression types. The processor may further determine a model feature vector based on a set of model attributes corresponding to the standard DL model. The processor may further determine a dataset feature vector based on a set of input dataset attributes corresponding to an input dataset. The processor may further determine a concatenated vector of the compression feature vector, the model feature vector and the dataset feature vector. The processor may further select a compression strategy from a plurality of compression strategies using a neural network (NN). In an embodiment, the NN may be trained based on the concatenated vector. In an embodiment, the trained NN may determine a predicted accuracy rate and a predicted parameter reduction information of each of the plurality of compression strategies. In an embodiment, the selected compression strategy by the trained NN may correspond to one of the plurality of compression strategies having a predicted accuracy rate and a predicted parameter reduction information about equal to a reference accuracy rate and a reference parameter reduction information respectively of a provisional compression type from the plurality of provisional compression types. The processor may further determine a compression embedding corresponding to the selected compression strategy.

## BRIEF DESCRIPTION OF THE DRAWING

**FIG. 1** illustrates a block diagram of an exemplary compression system for compressing deep learning models, in accordance with an embodiment of the present disclosure.

**FIG. 2** illustrates a functional block diagram of a computing device, in accordance with an embodiment of the present disclosure.

**FIG. 3** depicts a table including an exemplary search space, in accordance with an embodiment of the present disclosure.

**FIG. 4** illustrates an exemplary knowledge graph, in accordance with an embodiment of the present disclosure.

**FIG. 5** illustrates a flow diagram of a method of training a neural network (NN), in accordance with an embodiment of present disclosure.

**FIG. 6** illustrates a flowchart of a method of compressing deep learning models, in accordance with an embodiment of the present disclosure.

## DETAILED DESCRIPTION OF THE DRAWINGS

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered exemplary only, with the true scope being indicated by the following claims. Additional illustrative embodiments are listed.

Further, the phrases "in some embodiments", "in accordance with some embodiments", "in the embodiments shown", "in other embodiments", and the like mean a particular feature, structure, or characteristic following the phrase is included in at least one embodiment of the present disclosure and may be included in more than one embodiment. In addition, such phrases do not necessarily refer to the same embodiments or different embodiments. It is intended that the following detailed description be considered exemplary only, with the true scope being indicated by the following claims.

The process of compressing deep learning models involves the challenge of maintaining accuracy while reducing their size. Different techniques are applied based on specific applications, making it essential to identify suitable methods for each scenario. Selection of a suitable compression technique for a particular domain requires expertise and knowledge of the domain and the compression techniques.

For example, to determine an appropriate compression technique for a deep learning model related to computer vision, expertise in computer vision is crucial. Further, the selection of the most appropriate compression technique or strategy often involves a trial-and-error approach, adding to the already existing complexities. Further, the type of input data of the deep learning model to be compressed is also required to be considered when determining a compression technique. Therefore, automating the compression process provides a significant solution to solve above mentioned complexities. However, automating the compression process of deep learning models still remains challenging due to the domain-specific nature of compression techniques. Overall, achieving efficient compression necessitates a combination of domain expertise, trial-and-error experimentation, and a thorough understanding of the dataset and model characteristics.

Accordingly, the present disclosure provides a method and system for automatically compressing deep learning models.

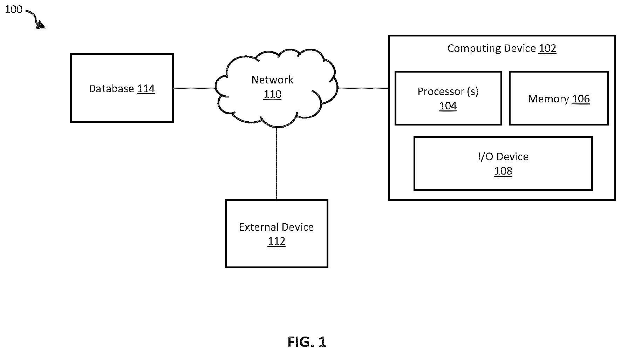

Referring now to **FIG. 1,** a block diagram of an exemplary compression system 100 for compressing deep learning models is illustrated, in accordance with an embodiment of the present disclosure. The compression system 100 may include a computing device 102, an external device 112, and a database 114 communicably coupled to each other through a wired or wireless communication network 110. The computing device 102 may include a processor 104, a memory 106 and an input/output (I/O) device 108.

In an embodiment, examples of processor(s) 104 may include, but are not limited to, an Intel® Itanium® or Itanium 2 processor(s), or AMD® Opteron® or Athlon MP® processor(s), Motorola® lines of processors, Nvidia®, FortiSOC™ system on a chip processors or other future processors. In an embodiment, the processor(s) 104 may combinedly work with "Graphical Processing Unit (GPUs)" or neural network accelerators or deep learning accelerators.

In an embodiment, the memory 106 may store instructions that, when executed by the processor 104, and cause the processor 104 to compress deep learning (DL) models, as discussed in more detail below. In an embodiment, the memory 106 may be a non-volatile memory or a volatile memory. Examples of non-volatile memory may include but are not limited to, a flash memory, a Read Only Memory (ROM), a Programmable ROM (PROM), Erasable PROM (EPROM), and Electrically EPROM (EEPROM) memory. Further, examples of volatile memory may include but are not limited to, Dynamic Random Access Memory (DRAM), and Static Random-Access memory (SRAM).

In an embodiment, the I/O device 108 may comprise of variety of interface(s), for example, interfaces for data input and output devices, and the like. The I/O device 108 may facilitate inputting of instructions by a user communicating with the computing device 102. In an embodiment, the I/O device 108 may be wirelessly connected to the computing device 102 through wireless network interfaces such as Bluetooth®, infrared, or any other wireless radio communication known in the art. In an embodiment, the I/O device 108 may be connected to a communication pathway for one or more components of the computing device 102 to facilitate the transmission of inputted instructions and output results of data generated by various components such as, but not limited to, processor(s) 104 and memory 106.

In an embodiment, the database 114 may be enabled in a cloud or a physical database and may store a reference dataset, and training data. In an embodiment, the training data may include a plurality of test datasets that may be output by the computing device 102. In an embodiment, the database 114 may store data input by an external device 112 or output generated by the computing device 102.

In an embodiment, the communication network 110 may be a wired or a wireless network or a combination thereof. The network 110 can be implemented as one of the different types of networks, such as but not limited to, ethernet IP network, intranet, local area network (LAN), wide area network (WAN), the internet, Wi-Fi, LTE network, CDMA network, 5G and the like. Further, network 110 can either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further network 110 can include a variety of network devices, including routers, bridges, servers, computing devices, storage devices, and the like.

In an embodiment, the computing device 102 may compress deep learning (DL) models deployed on an external device 112 through the network 110. In an embodiment, the computing device 102 and the external device 112 may be a computing system, including but not limited to, a smart phone, a laptop computer, a desktop computer, a notebook, a workstation, a portable computer, single board computer, system on chip, embedded device, or a mobile device. In an embodiment, the computing device 102 may be, but not limited to, in-built into the external device 112 or may be a standalone computing device.

In an embodiment, the computing device 102 may perform various processing for compressing the deep learning (DL) models. By way of an example, the computing device 102 may receive a verified DL model. In an embodiment, the verified DL model may be determined based on a data verification of a DL model based on a plurality of test datasets. Accordingly, based on the data verification, dataflow in the DL model may be validated. In an embodiment, examples of the DL model may include but are not limited to, convolutional neural networks, recurrent neural networks, generative adversarial networks, autoencoders, generative models, Large Language Models (LLM), multimodal LLM, diffusion models, etc. In an embodiment, the DL model may be written in a framework. Examples of the framework may include but are not limited to Keras, Pytorch, Tensorflow, paddle, MxNet, Caffe, etc. Further, the computing device 102 may receive an input dataset input by a user via the I/O device 108.

In an embodiment, the verified DL model may be determined based on a methodology described in co-filed patent application titled "METHOD AND SYSTEM OF VERIFYING DEEP LEARNING MODELS" incorporated herein in its entirely by reference.

Further, the computing device 102 may convert the verified DL model into a standard DL model based on a framework corresponding to a plurality of provisional compression types. In an embodiment, the plurality of provisional compression types may include one or more or a combination of, but are not limited to, pruning, quantization, factorization, knowledge distillation, low-rank approximation, network architecture search, etc.

In an embodiment, the pruning is a technique of discarding the weights that do not improve a model's performance. Careful pruning may compress a model to reduce its size making it suitable for deployment onto smartphones and other resource-constrained devices. In another embodiment, quantization of neural networks is a process of converting network weights and activations from higher precision (32 bit) to lower precision (usually 8 bit or below) that may help is reduction of the size of the DL model.

In an embodiment, the factorization is a technique of breaking or decomposition of a matrix into a product of another entity, or factors which when multiplied together gives the original matrix that is also used to reduce the size of DL models. In another embodiment, knowledge distillation is a process to train a compact neural network using the distilled knowledge extrapolated from a large model or ensemble of models in order to achieve a DL model which is compact in size even after training. In an embodiment, low-rank approximation may include reducing the complexity of the neural network, making it more efficient in terms of memory and computation while retaining as much of its original predictive power as possible. In an embodiment, the network architecture search may search for smaller network architecture from the given search space variables like number of layers, number of filters, etc.

Further, the computing device 102 may further determine a compression feature vector based on a knowledge graph corresponding to the plurality of provisional compression types. In an embodiment, in order to determine a knowledge graph, the computing device 102 may be configured to determine a search space based on an aggregation of a set of performance parameters of the plurality of provisional compression types for each of a plurality of domains. Such set of performance parameters may be determined from domain knowledge corresponding to the plurality of provisional compression types. In an embodiment, the plurality of domains may correspond to a plurality technical area of application of the DL model. In an embodiment, the plurality technical area of application of the DL model may include but is not limited to medical, agriculture, drones, finance, robotics, gaming, education, etc. Further, the domain knowledge may include, but is not limited to, research papers, experimental data, technical data, etc. in the field of compressing variety of DL models utilized in various technical areas. In an embodiment, the set of performance parameters may include a plurality of model compression techniques, one or more hyperparameters, one or more hardware deployment parameters, a reference accuracy, a reference error, a reference latency time, and a reference parameter reduction corresponding to each of the plurality of provisional compression types.

Accordingly, the computing device 102 may determine the knowledge graph based on the search space. In an embodiment, the knowledge graph may include a plurality of nodes corresponding to the set of performance parameters. In an embodiment, each of the plurality of nodes may correspond to the set of performance parameters. In an embodiment, each of the plurality of nodes may be connected to determine a plurality of relationships between each of the set of performance parameters of the plurality of provisional compression types for each of the plurality of domains.

Further, the computing device 102 may determine a model feature vector based on a set of model attributes corresponding to the standard DL model. Further, the computing device 102 may determine a dataset feature vector based on a set of input dataset attributes corresponding to the input dataset. Further, the computing device 102 may determine a concatenated vector of the compression feature vector, the model feature vector and the dataset feature vector.

Further, the computing device 102 may select a compression strategy from a plurality of compression strategies using a neural network (NN). In an embodiment, the NN may be trained based on the concatenated vector. In an embodiment, each of the plurality of compression strategies may include a unique combination of the set of performance parameters for compressing the DL model based on each of the plurality of provisional compression types. Accordingly, in order to select the compression strategy, the computing device 102 may train a bias of the NN based on one or more of a model score corresponding to the verified DL model, a dataset score corresponding to the input dataset, and/or a model performance score determined based on the data verification of the DL model.

In an embodiment, the model performance score may be determined based on a methodology described in co-filed patent application titled "METHOD AND SYSTEM OF VERIFYING DEEP LEARNING MODELS" incorporated herein in its entirely by reference.

In an embodiment, the NN may determine a predicted accuracy rate and a predicted parameter reduction information of each of the plurality of compression strategies. In an embodiment, the selected compression strategy by the NN corresponds to one of the plurality of compression strategies having a predicted accuracy rate and a predicted parameter reduction information about equal to a reference accuracy rate and a reference parameter reduction information respectively of a provisional compression type from the plurality of provisional compression types.

Further, the computing device 102 may determine a compression embedding corresponding to the selected compression strategy. In an embodiment, the computing device 102 may compress the data verified DL model based on the selected compression strategy in real time to determine a compact and compressed DL model for deployment on the computing device 102 without any latency and manual intervention.

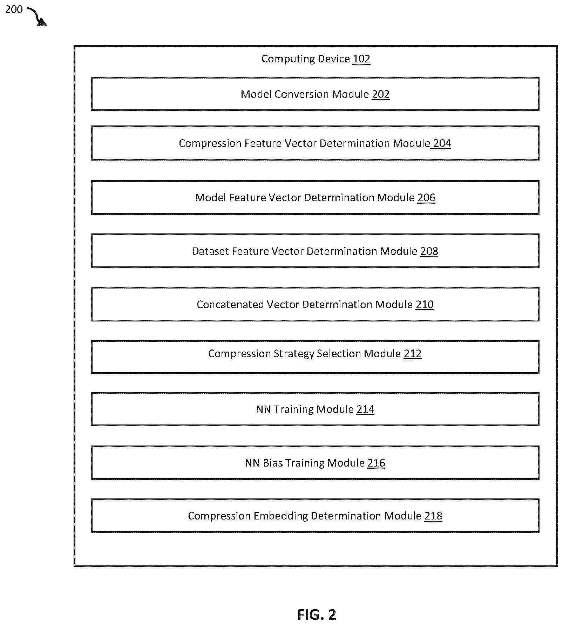

Referring now to **FIG. 2,** a functional block diagram of the computing device 102 is illustrated, in accordance with an embodiment of the present disclosure. In an embodiment, the computing device 102 may receive a verified deep learning (DL) model. In another embodiment, the computing device 102 may receive information of the verified DL model such as but is not limited to chipset configuration in deployment CPU/GPU/NPU, precision support (8bit / 16bit / mixed precision), support for sparsity, RAM memory size, etc. In an embodiment, the verified DL model may be determined based on a data verification of a DL model based on a plurality of test datasets. In an embodiment, examples of the DL model may include but are not limited to, convolutional neural networks, recurrent neural networks, generative adversarial networks, autoencoders, generative models, Large Language Models (LLM), multimodal LLM, diffusion models, etc. In an embodiment, the DL model may be written in a framework. Examples of the framework may include but are not limited to Keras, Pytorch, Tensorflow, paddle, MxNet, Caffe, etc. Further, the computing device 102 may receive an input dataset for being processed by the DL model.

In an embodiment, the computing device 102 may include a model conversion module 202, a compression feature vector determination module 204, a model feature vector determination module 206, a dataset feature vector determination module 208, a concatenated vector determination module 210, a compression strategy selection module 212, an NN training module 214, an NN bias training module 216, and a compression embedding determination module 218.

The model conversion module 202 may convert the verified DL model into a standard DL model based on a framework corresponding to a plurality of provisional compression types. In order to convert the verified DL model into a standard DL model, it may be first converted to a common standard format such as, but is not limited to, an open neural network exchange (ONNX) to determine common standard DL model.

Further, the common standard DL model may be converted into a standard DL framework in which the compression algorithms may be designed. Examples of the standard DL framework may include but are not limited to pytorch, keras, paddle, MxNet, Caffe, etc. In an embodiment, during this two-stage conversion, the layer compatibility may be analyzed and ensured that the mathematical operation within the layers of the DL model is preserved. In an exemplary embodiment, if the DL model is in keras and if the compression algorithms is designed in pytorch. The DL model is converted from keras to ONNX first and from ONNX to pytorch.

Further, the compression feature vector determination module 206 may determine a compression feature vector based on a knowledge graph corresponding to the plurality of provisional compression types. In an embodiment, the plurality of provisional compression types may include, one or more of, but are not limited to, pruning, quantization, knowledge distillation, and/or low-rank approximation, network architecture search, etc. In an embodiment, the compression feature vector determination module 204 may determine the compression feature vector using an embedding learning method. Examples of the embedding learning method may include, but is not limited to, trans L, trans R, etc. In an exemplary embodiment, the compression feature vector gives a vector or a numerical representation of the domain knowledge from the entity relation and corresponding knowledge graph.

In an embodiment, in order to determine knowledge graph, the compression feature vector determination module 206 may be configured to determine a search space by aggregating a set of performance parameters of the plurality of provisional compression types for each of a plurality of domains from domain knowledge corresponding to the plurality of provisional compression types. Further, the domain knowledge may include, but is not limited to, research papers, experimental data, technical data, etc. in the field of compressing variety of DL models utilized in various technical areas. In an embodiment, the plurality of compression provisional compression types may be determined based on the domain knowledge.

In an embodiment, the set of performance parameters may include a plurality of model compression techniques, one or more hyperparameters, and one or more hardware deployment parameters, a reference accuracy, a reference error, a reference latency time, and a reference parameter reduction corresponding to each of the plurality of provisional compression types. In an embodiment, the plurality of domains may correspond to a plurality technical area of application of the DL model. In an embodiment, the plurality technical area of application of the DL model may include but is not limited to medical, agriculture, drones, finance, robotics, gaming, education, etc. In an embodiment, the search space may be determined for the plurality of domains. Examples of the plurality of domains may be but is not limited to natural language processing, audio analytics, video processing, computer vision, etc. In an exemplary embodiment, the search space refers to the set of possible paths, nodes, or relationships that can be explored when searching for information or making queries within the knowledge graph. The search space encompasses all the potential routes or connections between nodes that may lead to relevant information such as the domain knowledge here.

In an embodiment, the search space or the domain knowledge determined, may be converted to a knowledge graph format. In an exemplary embodiment, a knowledge graph is a structured representation of knowledge that captures relationships between entities, concepts, or nodes in a graph format. It is designed to organize information in a way that reflects the inherent connections and dependencies within a knowledge domain. Key elements of a knowledge graph include nodes (representing entities or concepts) and edges (representing relationships between these entities).

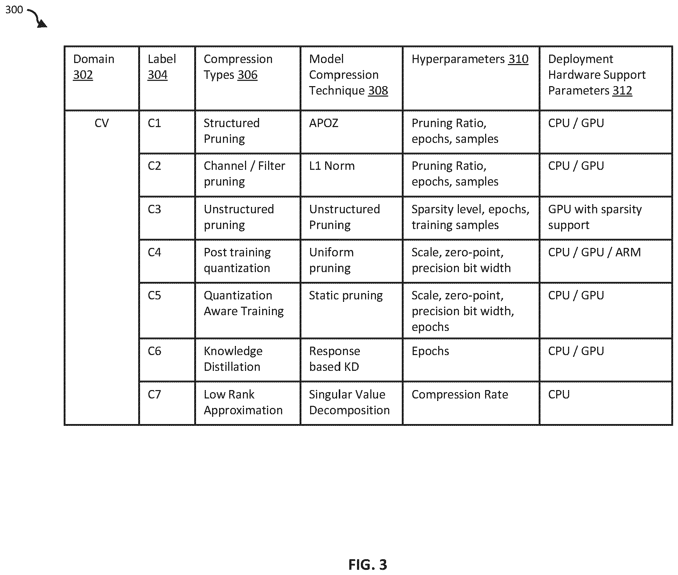

Referring now to **FIG. 3,** a table 300 depicts a search space, in accordance with an embodiment of the present disclosure. Table 300 depicts the search space that may be determined based on aggregation of the set of performance parameters of the plurality of provisional compression types for each of a plurality of domains from domain knowledge corresponding to the plurality of provisional compression types. In an embodiment, the table may include a domain 302 from the plurality of domains, a label 304 corresponding to the plurality of provisional compression types, and the set of performance parameters 306-312. The set of performance parameters 306-312 may include a plurality of provisional compression types 306, a plurality of model compression techniques 308, one or more hyperparameters 310, and one or more hardware deployment parameters 312, a reference accuracy, a reference error, a reference latency time, and a reference parameter reduction corresponding to each of the plurality of provisional compression types.

Referring back to **FIG. 2,** the compression feature vector determination module 204 may determine the knowledge graph based on the search space. In an embodiment, the knowledge graph may include a plurality of nodes corresponding to the set of performance parameters. In an embodiment, each of the plurality of node may be connected to determine a plurality of relationships between one or more of the set of performance parameters of the plurality of provisional compression types for each of the plurality of domains.

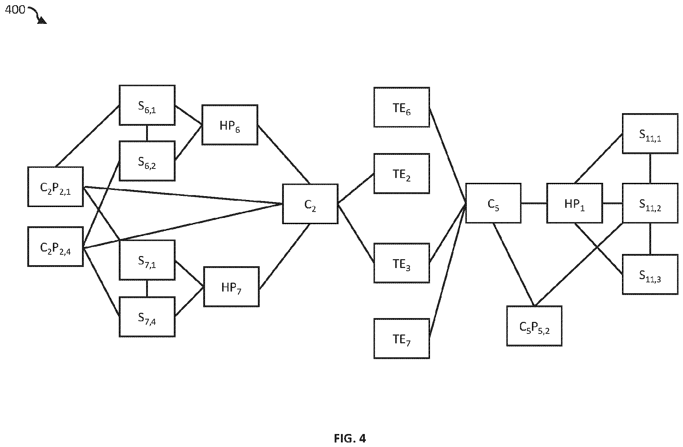

Referring now to **FIG. 4,** an exemplary knowledge graph 400 is illustrated, in accordance with an embodiment of the present disclosure. The exemplary knowledge graph 400 as shown includes a plurality of nodes that may correspond to the set of performance parameters. The exemplary knowledge graph 400 may correspond to a plurality of relationships between the plurality of nodes corresponding to each of the set of performance parameters of the plurality of provisional compression types. In an embodiment, each of the plurality of nodes may be connected to determine a plurality of relationships between each of the set of performance parameters of the plurality of provisional compression types for each of the plurality of domains. In an embodiment, the plurality of nodes may include hyperparameters $HP_l$, a setting of hyperparameters $S_{i,j}$, a technique $TE_n$, a compression method $C_k$, a compression strategy $C_kP_{k,m}$, a setting of compression strategy $P_{k,m}$. In an embodiment, a structure representing the plurality of relationships between the plurality of nodes may be referred to as a knowledge graph.

In an exemplary embodiment, the knowledge graph 400 that may include a plurality of compression strategies $C_kP_{k,m}$ each differentiated based on its corresponding technical and structural settings to aid the computing device 102 to learn relations and differences between different compression strategies $C_kP_{k,m}$. Further, the knowledge graph 400 may include any number of entity relations that may be established between the entity nodes based on permutation and combinations. Examples of such entity relations may include R1: corresponding relation between a compression strategy $C_kP_{k,m}$ and its compression method $C_k$, R2: corresponding relation between a compression strategy $C_kP_{k,m}$ and its hyperparameter setting $S_{i,j}$, R3: corresponding relation between a compression method $C_k$ and its hyperparameter HPi, R4: corresponding relation between a compression method $C_k$ and its compression technique $TE_n$, R5: corresponding relation between a hyperparameter HPi and its setting $S_{i,j}$. In an embodiment, R1 and R2 may describe the composition details of a compression strategies, R3 and R4 may provide a brief description of compression methods, R5 may illustrate the meaning of hyperparameter settings.

In an exemplary embodiment, TransR may be used to effectively parameterize entities and relations in the knowledge graph as vector representation to determine a knowledge graph vector "G", while preserving the graph structure of the knowledge graph 400 in the knowledge graph vector "G". Accordingly, in case the knowledge graph vector "G" includes a triplet (h; r; t), we may learn embedding of each entity and relation by optimizing the translation principle to convert the knowledge graph into a vector representation. In an exemplary embodiment, in case the translation principle is represented by equation (1) given below.

$$Wreh + er \approx Wret \qquad\qquad ......(1)$$

Where, eh; et may be an element of Rd and er may be an element of Rk that may be the embedding for h, t, and r respectively.

Where, Wr may be the element of Rkd may be the transformation matrix of relation r.

In an embodiment as disclosed above, the embedding of compression strategy $C_iP_{i,j}$ learned from the knowledge graph 400 that may be denoted as $eC_iP_{i,j}$.

Referring back to **FIG. 2,** the model feature vector determination module 206 may determine a model feature vector based on a set of model attributes corresponding to the standard DL model. In an embodiment, the set of model attributes corresponding to the standard DL model may include model's trainable parameters such as, but are not limited to, original model's parameter amount, FLOPs, accuracy score on the input dataset obtained, etc. Further, the dataset feature vector determination module 208 may determine a dataset feature vector based on a set of input dataset attributes corresponding to the input dataset. In an embodiment, the set of input dataset attributes, may include, but are not limited to, number of classes, image size, number of channels in the image, type of layers, number of channels / filters, latency, and/or total number of test samples, token size (for NLP applications), correlation with dataset, etc. Further, the concatenated vector determination module 210 may determine a concatenated vector of the compression feature vector, the model feature vector and the dataset feature vector.

Further, the compression strategy selection module 212 may select a compression strategy from a plurality of compression strategies using a neural network (NN). In an embodiment, each of the plurality of compression strategies may include a unique combination of the set of performance parameters for compressing the DL model based on each of the plurality of provisional compression types. In an embodiment, example of the unique combination of the set of performance parameters for compressing the DL model may include, but is not limited to, pruning followed by quantization then knowledge discretion, pruning followed by knowledge distillation, etc. In an embodiment, the NN may be trained based on the concatenated vector by the NN training module 214.

Further, in order to select the compression strategy, the NN bias training module 216 may train a bias of the NN based on one or more of a model score corresponding to the verified DL model, a dataset score corresponding to the input dataset, and a model performance score determined based on the data verification of the DL model. In an embodiment, the concatenated vector and the bias of the NN may be further summed up. In an embodiment, the model score may be a quantitative value that may indicate the architectural complexity of the DL model. In an embodiment, the model score may be normalized to its value 0 and 1 using a normalization function. In an exemplary embodiment, the model score may be calculated based on an exemplary formula given by equation (2) given below:

$$Model\ score = Normalization\ of\ [0.5 * \log(no.\ of\ trainable\ parameters)) + 0.25 * \log(no.\ of\ filters) + 0.15 * \log(no.\ of\ layers) + 0.10 * \log(no.\ of\ non\text{-}\ trainable\ parameters)] \tag{2}$$

In an embodiment, the dataset score may indicate the complexity of the input dataset. In an embodiment, the dataset score may be normalized to a value between 0 and 1 using a normalization function. In an exemplary embodiment, the dataset score may be calculated based on formula given by equation (3) given below:

$$Data\ score = Normalization\ of\ [\log(interclass\ variance) + \log(interclass\ variance) + \log(lacalization) + \log(outliers)] \tag{3}$$

In an embodiment, the NN may determine a predicted accuracy rate and a predicted parameter reduction information of each of the plurality of compression strategies. Further, the NN training module 214 may determine a difference between the predicted accuracy rate and the predicted parameter reduction information and the reference accuracy rate and the reference parameter reduction information respectively to determine an error of the NN. The NN training module 214 may then train the NN using training techniques such as, but not limited to, backpropagation, gradient descent, etc. based on determination of the error. Accordingly, based on the training the NN may learn information and pattern corresponding to different types of the compression strategies. Accordingly, the NN may be trained to determine a compression strategy from the plurality of compression strategies that may be selected for having a predicted accuracy rate and a predicted parameter reduction information about equal to the reference accuracy rate and the reference parameter reduction information respectively of one or more corresponding provisional compression types from the plurality of provisional compression types.

Further, the compression embedding determination module 218 may determine a compression embedding corresponding to the selected compression strategy. In an embodiment, the compression embedding determination module 218 may determine the compression embedding using an embedding learning method. The embedding learning method may be used to inject the domain knowledge in the knowledge graph to determine representations of the compression strategies and to learn effective representations of compression strategies. In an embodiment, the compression embedding may indicate the type of provisional compression type to be applied to the DL model in order to compress the DL model for its efficient deployment in consideration of the resource constraints of the computing device 102.

In another embodiment, the trained NN may be further tested or deployed based on real world parameters. In an exemplary embodiment, the computing device 102 may receive a verified DL model. The verified DL model may be determined based on a data verification of a DL model based on a plurality of test datasets to ensure dataflow validity. Further, the computing device 102 may receive an input dataset. Further, the computing device 102 may determine a model score corresponding to the verified DL model, a dataset score corresponding to the input dataset, and a model performance score determined based on the verification of the DL model. Further, the computing device 102 may determine a compression embedding corresponding to the selected strategy for the DL model based on the model score, the dataset score, and the model performance score by using the trained NN. The output of the tested NN may then be compared to the reference accuracy rate and the reference parameter reduction information respectively of one or more corresponding provisional compression types from the plurality of provisional compression types. In an embodiment, the tested NN may further be trained in order to in case the output of the tested NN is not about equal to the reference accuracy rate and the reference parameter reduction information respectively of one or more corresponding provisional compression types from the plurality of provisional compression types. A difference between the predicted accuracy rate and the predicted parameter reduction information and the reference accuracy rate and the reference parameter reduction information respectively to determine an error of the NN being tested. The NN may then be further trained using training techniques such as, but not limited to, backpropagation, gradient descent, etc. based on determination of the error.

Accordingly, based on the training the NN may learn information and pattern corresponding to different types of the compression strategies for a successful test.

It should be noted that all such aforementioned modules 202-218 may be represented as a single module or a combination of different modules. Further, as will be appreciated by those skilled in the art, each of the modules 202-218 may reside, in whole or in parts, on one device or multiple devices in communication with each other. In some embodiments, each of the modules 202-218 may be implemented as dedicated hardware circuit comprising custom application-specific integrated (ASIC) or gate arrays, off-the-shelf semiconductors such as logic chips, transistors, or other discrete components. Each of the modules 202-218 may also be implemented in a programmable hardware device such as a field programmable gate array (FGPA), programmable array logic, programmable logic device, and so forth. Alternatively, each of the modules 202-218 may be implemented in software for execution by various types of processors (e.g. processor 104). An identified module of executable code may, for instance, include one or more physical or logical blocks of computer instructions, which may, for instance, be organized as an object, procedure, function, or other construct. Nevertheless, the executables of an identified module or component need not to be physically located together but may include disparate instructions stored in different locations which, when joined logically together, include the module and achieve the stated purpose of the module. Indeed, a module of executable code could be a single instruction and may even be distributed over several different code segments, among different applications, and across several memory devices.

As will be appreciated by one skilled in the art, a variety of processes may be employed for performing face recognition-based authentication. For example, the exemplary system 100 and the associated computing device 102 may verify deep learning models by the processes discussed herein. In particular, as will be appreciated by those of ordinary skill in the art, control logic and/or automated routines for performing the techniques and steps described herein may be implemented by the system 100 and the associated computing device 102 either by hardware, software, or combinations of hardware and software. For example, suitable code may be accessed and executed by the one or more processors on the system 100 to perform some or all of the techniques described herein. Similarly, application-specific integrated circuits (ASICs) configured to perform some, or all of the processes described herein may be included in the one or more processors on the system 100.

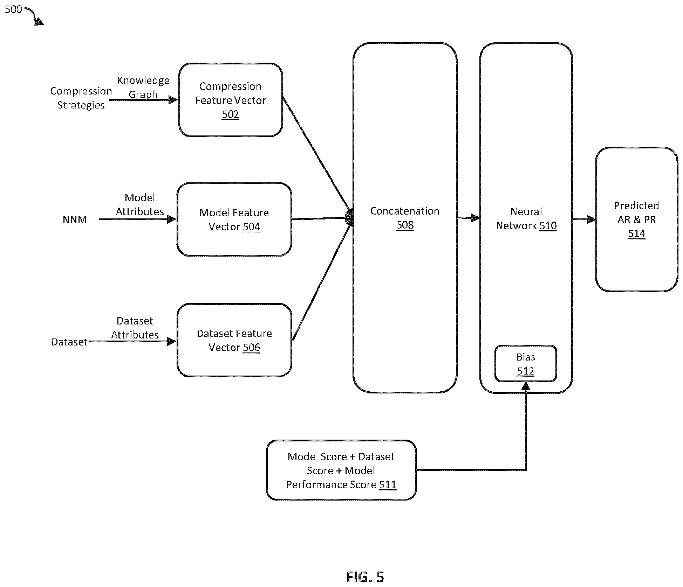

Referring now to **FIG. 5,** a flow diagram of a method of training a neural network (NN) is illustrated, in accordance with an embodiment of present disclosure. In an embodiment, method 500 may include a plurality of steps that may be performed by the processor 104 to determine a compression embedding.

**FIG. 5** is explained in conjunction with **FIGs. 1** and **2.** Each step of the method 500 may be executed by various modules of the computing device 102.

At step 502, a compression feature vector may be determined based on a knowledge graph corresponding to the plurality of provisional compression strategies.

Further, at step 504, a model feature vector may be determined based on a set of model attributes corresponding to the standard DL model.

Further, at step 506, a dataset feature vector may be determined based on a set of input dataset attributes corresponding to an input dataset.

Further, at step 508, a concatenated vector may be determined based on the compression feature vector, the model feature vector, and the dataset feature vector.

Further, at step 510, the NN may be trained based on the concatenated vector. In an embodiment, the NN may be, but not limited to, a Multi-Layer Perceptron.

Further, at step 512, a bias of the NN may be trained based on a model score corresponding to the standard DL model, a dataset score corresponding to the input dataset, and a model performance score determined at step 511 based on the data verification of the trained DL model.

Further, at step 514, a predicted accuracy rate and a predicted parameter reduction information of each of the plurality of compression strategies may be determined.

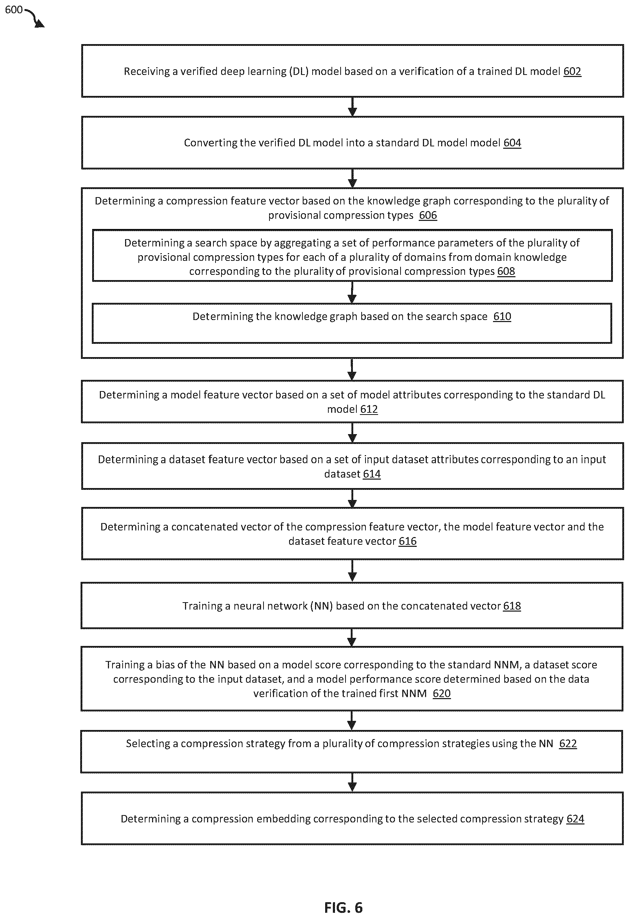

Referring now to **FIG. 6,** a flowchart of a method of compressing deep learning models, in accordance with an embodiment of the present disclosure. In an embodiment, method 500 may include a plurality of steps that may be performed by the processor 104 to compress deep learning models.

**FIG. 6** is explained in conjunction with **FIGs. 1-5.** Each step of the method 500 may be executed by various modules of the computing device 102.

At step 602, a verified deep learning (DL) model may be received. In an embodiment, the verified DL model may be determined based on a data verification of a DL model based on a plurality of test datasets. In an embodiment, the verified DL model may be determined based on a methodology described in co-filed patent application titled "METHOD AND SYSTEM OF VERIFYING DEEP LEARNING MODELS" incorporated herein in its entirely by reference.

Further, at step 604, the verified DL model may be converted into a standard DL model based on a framework corresponding to a plurality of provisional compression types. In an embodiment, the plurality of provisional compression types may include pruning, quantization, knowledge distillation, network architecture search, and low-rank approximation.

Further, at step 606, a compression feature vector may be determined based on the knowledge graph corresponding to the plurality of provisional compression types.

Further, the knowledge graph may be determined based on sub-steps 608-610. At sub-step 608, a search space may be determined by aggregating a set of performance parameters of the plurality of provisional compression types for each of a plurality of domains from domain knowledge corresponding to the plurality of provisional compression types. In an embodiment, the plurality of domains may correspond to a plurality technical area of application of the DL model. In an embodiment, the plurality technical area of application of the DL model may include, but is not limited to, medical, agriculture, drones, finance, robotics, gaming, education, etc. In an embodiment, the set of performance parameters may include, but are not limited to, a plurality of model compression techniques, one or more hyperparameters, one or more hardware deployment parameters, a reference accuracy, a reference error, a reference latency time, a reference parameter reduction, etc. corresponding to each of the plurality of provisional compression types.

Further, at sub-step 610, the knowledge graph may be determined based on the search space. In an embodiment, the knowledge graph may include a plurality of nodes corresponding to the set of performance parameters. In an embodiment, each of the plurality of nodes may be connected to determine a plurality of relationships between each of the set of performance parameters of the plurality of provisional compression types for each of the plurality of domains.

Further, at step 612, a model feature vector may be determined based on a set of model attributes corresponding to the standard DL model. Further, at step 614, a dataset feature vector may be determined based on a set of input dataset attributes corresponding to the input dataset. Further, at step 616, a concatenated vector may be determined based on the compression feature vector, the model feature vector and the dataset feature vector determined at steps 606, 612 and 614 respectively. Further, at step 618, a neural network (NN) may be trained based on the concatenated vector.

Further, at step 620, a bias of the NN may be trained based on one or more of a model score corresponding to the verified DL model, a dataset score corresponding to the input dataset, and a model performance score determined based on the data verification of the DL model.

Further, at step 622, a compression strategy may be selected from a plurality of compression strategies using the NN. In an embodiment, each of the plurality of compression strategies may include a unique combination of the set of performance parameters for compressing the DL model based on each of the plurality of provisional compression types. In an embodiment, example of the unique combination of the set of performance parameters for compressing the DL model may include, but is not limited to, pruning followed by quantization then Knowledge distillation, etc.

In an embodiment, the NN may determine a predicted accuracy rate and a predicted parameter reduction information of each of the plurality of compression strategies. In an embodiment, the selected compression strategy by the NN may correspond to one of the plurality of compression strategies having a predicted accuracy rate and a predicted parameter reduction information about equal to a reference accuracy rate and a reference parameter reduction information respectively of one or more corresponding provisional compression types from the plurality of provisional compression types.

Further, at step 624, a compression embedding may be determined corresponding to the selected compression strategy.

Accordingly, the DL model may be compressed based on the selected compression strategy by the NN in order to be effectively deployed on the computing device 102. It is to be noted that based on the embodiments described in the present disclosure, any DL model may be automatically compressed when deployed without requiring any manual intervention.

Accordingly, the embodiments of the present disclosure effectively provide solution to the challenges for compressing DL models that may include, but are not limited to, scaling to larger models, slow computation, tuning of hyper-parameter required to obtain optimal performance. Further, optimizing the compression allocation parameters introduces considerable computational complexity at the finetuning stage. In another embodiment, compressing the DL model may be indispensable while preparing the DL model for deployment in cloud, CPU, or embedded devices. The methodology of compressing the DL models as described in present disclosure may down-size the models without compromising accuracy. Further, the methodology as described in the present disclosure may be select a model compression technique from different types of model compression techniques based on the application area and input data type to deliver the best performance without compromising accuracy. Therefore, the methodology of the present disclosure prevents multiple iterations and requirement of domain knowledge to determine a compression strategy to compress DL models maintaining the accuracy.

Thus, the disclosed method and system tries to overcome the technical problem of compressing deep learning (DL) models through an end-to-end robust unified model compression framework to compress the DL model without compromising accuracy and effectiveness.

As will be appreciated by those skilled in the art, the techniques described in the various embodiments discussed above are not routine, or conventional, or well-understood in the art. The techniques discussed above provide for compressing DL model.

In light of the above-mentioned advantages and the technical advancements provided by the disclosed method and system, the claimed steps as discussed above are not routine, conventional, or well understood in the art, as the claimed steps enable the following solutions to the existing problems in conventional technologies. Further, the claimed steps bring an improvement in the functioning of the device itself as the claimed steps provide a technical solution to a technical problem.

The specification has described method and system for compressing deep learning models. The illustrated steps are set out to explain the exemplary embodiments shown, and it should be anticipated that ongoing technological development will change the manner in which particular functions are performed. These examples are presented herein for purpose of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments.

It is intended that the disclosure and examples be considered as exemplary only, with a true scope of disclosed embodiments being indicated by the following claims.

**Claims**

1. The method (600) of compressing a deep learning (DL) model, the method comprising:

   receiving (602), by a computing device (102), a verified DL model, wherein the verified DL model is determined based on a data verification of a DL model based on a plurality of test datasets;
   converting (604), by the computing device (102), the verified DL model into a standard DL model based on a framework corresponding to a plurality of provisional compression types;
   determining (606), by the computing device (102), a compression feature vector based on a knowledge graph corresponding to the plurality of provisional compression types;
   determining (612), by the computing device (102), a model feature vector based on a set of model attributes corresponding to the standard DL model;
   determining (614), by the computing device (102), a dataset feature vector based on a set of input dataset attributes corresponding to an input dataset;
   determining (616), by the computing device (102), a concatenated vector of the compression feature vector, the model feature vector and the dataset feature vector;
   selecting (622), by the computing device (102), a compression strategy from a plurality of compression strategies using a neural network (NN),

      wherein the NN is trained based on the concatenated vector,
      wherein the NN determines a predicted accuracy rate and a predicted parameter reduction information of each of the plurality of compression strategies, and
      wherein the selected compression strategy by the trained NN corresponds to one of the plurality of compression strategies having a predicted accuracy rate and a predicted parameter reduction information about equal to a reference accuracy rate and a reference parameter reduction information respectively of one or more corresponding provisional compression types from the plurality of provisional compression types; and

   determining (624), by the computing device (102), a compression embedding corresponding to the selected compression strategy.

2. The method as claimed in claim 1, comprising:
   training (620), by the computing device (102), a bias of the NN based on one or more of a model score corresponding to the verified DL model, a dataset score corresponding to the input dataset, and a model performance score determined based on the data verification of the DL model.

3. The method (600) as claimed in claim 1, wherein the knowledge graph is determined by:

   determining (608), by the computing device (102), a search space by aggregating a set of performance parameters of the plurality of provisional compression types for each of a plurality of domains from domain knowledge corresponding to the plurality of provisional compression types,
   wherein the plurality of domains corresponds to a plurality technical area of application of the DL model; and

determining (610), by the computing device (102), the knowledge graph based on the search space,

wherein the knowledge graph comprises a plurality of nodes corresponding to the set of performance parameters, and
wherein each of the plurality of nodes are connected to determine a plurality of relationships between each of the set of performance parameters of the plurality of provisional compression types for each of the plurality of domains.

4. The method (600) as claimed in claim 3, wherein the set of performance parameters comprises a plurality of model compression techniques, one or more hyperparameters, one or more hardware deployment parameters, a reference accuracy, a reference error, a reference latency time, and a reference parameter reduction corresponding to each of the plurality of provisional compression types.

5. The method (600) as claimed in claim 4, wherein each of the plurality of compression strategies comprises a unique combination of the set of performance parameters for compressing the first DL model based on each of the plurality of provisional compression types.

6. The method (600) as claimed in claim 1, wherein the plurality of provisional compression types comprises pruning, quantization, knowledge distillation, network architecture search, and low-rank approximation.

7. A system (100) of compressing a deep learning model (DL model), comprising:

a processor (104); and
a memory (106) communicably coupled to the processor (104), wherein the memory stores processor-executable instructions, which, on execution, cause the processor (104) to:

receive a verified DL model, wherein the verified DL model is determined based on a data verification of a DL model based on a plurality of test datasets;
convert the verified DL model into a standard DL model based on a framework corresponding to a plurality of provisional compression types;
determine a compression feature vector based on a knowledge graph corresponding to the plurality of provisional compression types;
determine a model feature vector based on a set of model attributes corresponding to the standard DL model;
determine a dataset feature vector based on a set of input dataset attributes corresponding to an input dataset;
determine a concatenated vector of the compression feature vector, the model feature vector and the dataset feature vector;
select a compression strategy from a plurality of compression strategies using a neural network (NN).

wherein the NN is trained based on the concatenated vector; and wherein the NN determines a predicted accuracy rate and a predicted parameter reduction information of each of the plurality of compression strategies, and
wherein the selected compression strategy by the trained NN corresponds to one of the plurality of compression strategies having a predicted accuracy rate and a predicted parameter reduction information about equal to a reference accuracy rate and a reference parameter reduction information respectively of one or more corresponding provisional compression types from the plurality of provisional compression types; and

determine a compression embedding corresponding to the selected compression strategy.

8. The system (100) as claimed in claim 7, wherein, the processor (104) is configured to:
train a bias of the NN based on one or more of a model score corresponding to the verified DL model, a dataset score corresponding to the input dataset, and a model performance score determined based on the data verification of the DL model,

9. The system (100) as claimed in claim 7, wherein the processor (104) is configured to:

determine a search space by aggregating a set of performance parameters of the plurality of provisional compression types for each of a plurality of domains from domain knowledge corresponding to the plurality of provisional compression types,

wherein the plurality of domains corresponds to a plurality technical area of application of the DL model; and determine the knowledge graph based on the search space,

wherein the knowledge graph comprises a plurality of nodes corresponding to the set of performance parameters, and

wherein each of the plurality of nodes are connected to determine a plurality of relationships between each of the set of performance parameters of the plurality of provisional compression types for each of the plurality of domains.

10. The system (100) as claimed in claim 9, wherein the set of performance parameters comprises a plurality of model compression techniques, one or more hyperparameters, one or more hardware deployment parameters, a reference accuracy, a reference error, a reference latency time, and a reference parameter reduction corresponding to each of the plurality of provisional compression types.

11. The system (100) as claimed in claim 10, wherein each of the plurality of compression strategies comprises a unique combination of the set of performance parameters for compressing the DL model based on each of the plurality of provisional compression types.

12. The system (100) as claimed in claim 7, wherein the plurality of provisional compression types comprises pruning, quantization, knowledge distillation, and low-rank approximation.

FIG. 1

200

Computing Device 102

Model Conversion Module 202

Compression Feature Vector Determination Module 204

Model Feature Vector Determination Module 206

Dataset Feature Vector Determination Module 208

Concatenated Vector Determination Module 210

Compression Strategy Selection Module 212

NN Training Module 214

NN Bias Training Module 216

Compression Embedding Determination Module 218

FIG. 2

| Domain 302 | Label 304 | Compression Types 306 | Model Compression Technique 308 | Hyperparameters 310 | Deployment Hardware Support Parameters 312 |
|---|---|---|---|---|---|
| CV | C1 | Structured Pruning | APOZ | Pruning Ratio, epochs, samples | CPU / GPU |
| | C2 | Channel / Filter pruning | L1 Norm | Pruning Ratio, epochs, samples | CPU / GPU |
| | C3 | Unstructured pruning | Unstructured Pruning | Sparsity level, epochs, training samples | GPU with sparsity support |
| | C4 | Post training quantization | Uniform pruning | Scale, zero-point, precision bit width | CPU / GPU / ARM |
| | C5 | Quantization Aware Training | Static pruning | Scale, zero-point, precision bit width, epochs | CPU / GPU |
| | C6 | Knowledge Distillation | Response based KD | Epochs | CPU / GPU |
| | C7 | Low Rank Approximation | Singular Value Decomposition | Compression Rate | CPU |

**FIG. 3**

FIG. 4

500

Compression
Strategies
—Knowledge Graph→
Compression
Feature Vector
502

NNM
—Model Attributes→
Model Feature
Vector 504

Dataset
—Dataset Attributes→
Dataset Feature
Vector 506

Concatenation
508

Neural
Network 510

Predicted
AR & PR
514

Bias
512

Model Score + Dataset
Score + Model
Performance Score 511

FIG. 5

600

Receiving a verified deep learning (DL) model based on a verification of a trained DL model 602

↓

Converting the verified DL model into a standard DL model model 604

↓

Determining a compression feature vector based on the knowledge graph corresponding to the plurality of provisional compression types 606

Determining a search space by aggregating a set of performance parameters of the plurality of provisional compression types for each of a plurality of domains from domain knowledge corresponding to the plurality of provisional compression types 608

↓

Determining the knowledge graph based on the search space 610

↓

Determining a model feature vector based on a set of model attributes corresponding to the standard DL model 612

↓

Determining a dataset feature vector based on a set of input dataset attributes corresponding to an input dataset 614

↓

Determining a concatenated vector of the compression feature vector, the model feature vector and the dataset feature vector 616

↓

Training a neural network (NN) based on the concatenated vector 618

↓

Training a bias of the NN based on a model score corresponding to the standard NNM, a dataset score corresponding to the input dataset, and a model performance score determined based on the data verification of the trained first NNM 620

↓

Selecting a compression strategy from a plurality of compression strategies using the NN 622

↓

Determining a compression embedding corresponding to the selected compression strategy 624

FIG. 6

Europäisches
Patentamt

European
Patent Office

Office européen
des brevets

## EUROPEAN SEARCH REPORT

**Application Number**

EP 25 15 5579

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHUNNAN WANG ET AL: "AutoMC: Automated Model Compression based on Domain Knowledge and Progressive search strategy", ARXIV.ORG, CORNELL UNIVERSITY LIBRARY, 201 OLIN LIBRARY CORNELL UNIVERSITY ITHACA, NY 14853, 24 January 2022 (2022-01-24), XP091139747, * Algorithm 1; figures 1, 2; table 1 * * page 1 - page 5 * | 1-12 | INV. G06N3/045 G06N3/0495 G06N3/082 G06N5/022 |

-----

**TECHNICAL FIELDS SEARCHED (IPC)**

G06N

The present search report has been drawn up for all claims

| Place of search | Date of completion of the search | Examiner |
|---|---|---|
| The Hague | 18 June 2025 | Tidriri, Khaoula |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)